**Europäisches Patentamt**

(19) **European Patent Office**

**Office européen des brevets**

(11) Veröffentlichungsnummer : **0 191 019**
**B1**

# (12) EUROPÄISCHE PATENTSCHRIFT

(45) Veröffentlichungstag der Patentschrift :
07.06.89

(51) Int. Cl.⁴ : **H 04 B   5/00**

(21) Anmeldenummer : **85901362.5**

(22) Anmeldetag : **14.03.85**

(86) Internationale Anmeldenummer :
**PCT/DE 85/00081**

(87) Internationale Veröffentlichungsnummer :
**WO/8601058 (13.02.86 Gazette 86/04)**

(54) **EINRICHTUNG ZUM ÜBERTRAGEN VON BINÄREN DATEN ZWISCHEN EINEM MOBILEN DATENTRÄGER UND EINER FESTSTATION.**

(30) Priorität : 26.07.84 DE 3427581

(43) Veröffentlichungstag der Anmeldung :
20.08.86 Patentblatt 86/34

(45) Bekanntmachung des Hinweises auf die Patenterteilung : 07.06.89 Patentblatt 89/23

(84) Benannte Vertragsstaaten :
AT CH DE FR GB LI NL

(56) Entgegenhaltungen :
BE–A–   724 339
DE–A– 3 233 239
FR–A– 2 500 944
US–A– 3 299 424

(73) Patentinhaber : ROBERT BOSCH GMBH
Postfach 50
D-7000 Stuttgart 1 (DE)

(72) Erfinder : FAUSER, Edwin
Justiner-Kerner-Strasse 8
D-7257 Ditzingen (DE)
Erfinder : LIST, Hans
Bohrrainstrasse 20
D-7530 Pforzheim (DE)
Erfinder : SCHIRMER, Günter
Kettenweg 13
D-7121 Ingersheim (DE)

## Beschreibung

### Stand der Technik

Die Erfindung betrifft eine Einrichtung zum Übertragen von binären Daten zwischen einem mobilen Datenträger und einer Feststation, insbesondere zwischen einem Werkstücksträger und einer Bearbeitungs- oder Steuerstation an Transferstraßen oder Montagebändern, der im Anspruch angegebenen Gattung.

Bei einer bereits vorgeschlagenen Einrichtung dieser Art gemäß der EP-A 01 41 070 (Anmeldetag : 4.8.84 Veröffentlichungstag : 15.5.85) werden zur Datenübertragung zwischen dem von einem Werkstückträger gebildeten Datenträger und der von einer Bearbeitungs- oder Steuerstation gebildeten Feststationen die auf Ferritkernen angeordneten Spulen der beiden Schwingkreise aus Gründen der Sicherheit der Datenübertragung möglichst dicht aneinander vorbeigeführt. Dies erfordert eine relativ genaue Anordnung des Werkstückträgers auf dem Montageband. Bei ungenauer Ausrichtung leidet die Betriebssicherheit in der Datenübertragung.

Zur Datenübertragung vom Datenträger zur Feststation wird datenträgerseitig der Ausschwingvorgang in den induktiv gekoppelten Spulen je nach Binärwert der Daten zeitlich verzögert oder beschleunigt. Zur Demodulation der übertragenen Daten wird feststationseitig zu einem bestimmten Zeitpunkt beim Ausschwingvorgang der Spannungswert abgefühlt und daraus der Binärwert ermittelt.

Zur Datenübertragung von der Feststation zum mobilen Datenträger wird die Frequenz der Schaltimpulsfolge zur Übertragung des Binärwertes logisch 1 auf f und zur Übertragung des Binärwerts logisch 0 auf 4/5 f festgelegt. Durch datenträgerseitige Frequenzdemodulation wird der übertragene Binärwert zurückgewonnen.

Aus der FR-A-25 00 944 ist eine Vorrichtung zur berührungslosen Übertragung von Zahlenwerten bekannt. Die Datenübertragung erfolgt über gekoppelte Schwingkreise. Die vom mobilen Teil zu einer Feststation zu übertragenen Zahlenwerte liegen als Binärsignal vor, mit dem ein Schalttransistor angesteuert wird, der parallel zum Schwingkreis geschaltet ist. Die Informationsgewinnung in der Feststation erfolgt durch Amplitudendemodulation, wobei die Trägerfrequenz erheblich höher als die zu übertragende Signalfrequenz ist.

Aus der US-A-3 299 424 ist ein Identifizierungssystem bekannt, bei dem die Spannung an einem Schwingkreis, der in einer Feststation angeordnet ist, von einem mobilen Teil beeinflußt wird. Im mobilen Teil ist ebenfalls ein Schwingkreis angeordnet, dessen Dämpfung im Rhythmus einer kodierten Information verändert wird. Die Dämpfung bewirkt im Schwingkreis der Feststation eine Amplitudenmodulation, aus der die kodierte Information zurückgewonnen wird. Die Schwingkreisfrequenz ist auch in diesem Fall erheblich größer als die zu übertragende Signalfrequenz.

### Vorteile der Erfindung

Die erfindungsgemäße Einrichtung mit den kennzeichnenden Merkmalen des Anspruchs 1 hat den Vorteil, daß ohne Verschlechterung der Betriebssicherheit die induktiv zu überbrückenden Abstände zwischen Datenträger und Feststation größer gemacht werden können. Durch die Resonanzübertragung wird der maximal zulässige Abstand zwischen den Spulen gegenüber der bekannten Einheit mindestens verdoppelt. Dies bedeutet einen größeren zulässigen Toleranzbereich bei der Ausrichtung des Werkzeugträgers in der Transferstraße oder auf dem Montageband. Durch die Amplitudenmodulation bei der Datenübertragung vom Datenträger zur Feststation wird zudem die Einrichtung unkritischer gegen Änderung der Streuinduktivität und gegen Bauelementtoleranzen.

Vorteilhafte Ausführungsformen der Erfindung ergeben sich aus den weiteren Ansprüchen 2-13.

Eine vorteilhafte Ausführungsform der Erfindung ergibt sich dabei aus Anspruch 5. Durch diesen Aufbau der Demodulationsschaltung zur feststationsseitigen Amplitudendemodulation wird eine einwandfreie Wiederherstellung des vom Datenträger zur Feststation übertragenen binären Signals gewährleistet, ohne daß dies durch langsame Schwankungen der Schwingungen in dem von den Spulen gebildeten Überträger, wie sie z. B. durch Abstandsänderung der Ferritkerne der beiden Schwingkreise hervorgerufen werden, beeinflußt wird. Insbesondere ist sichergestellt, daß die Impulsbreite der Binärsignale nicht unzulässig verändert wird, was für eine einwandfreie Datenübertragung besonders wichtig ist.

Eine vorteilhafte Ausführungsform der Erfindung ergibt sich auch aus Anspruch 7. Durch den Frequenzsprung 2 : 1 bei der Datenübertragung von der Feststation zum Datenträger wird sichergestellt, daß die Einrichtung sicher in Resonanz bleibt.

Eine vorteilhafte Ausführungsform der Erfindung ergibt sich auch aus Anspruch 4 und 11. Durch das jeweils vorgesehene Synchronisations-Latch ist sichergestellt, daß eine Veränderung der zu übertragenen Datensignale erst zu Beginn der nächsten Taktperiode wirksam wird.

### Zeichnung

Die Erfindung ist anhand eines in der Zeichnung dargestellten Ausführungsbeispiels in der nachfolgenden Beschreibung näher erläutert. Es zeigen :

Fig. 1 ein Schaltbild einer Einrichtung zur Datenübertragung von einem mobilen Datenträger zu einer Feststation und umgekehrt,

Fig. 2 eine Grafik des Signalverlaufs an ausgewählten Stellen im Schaltbild der Einrichtung gemäß Fig. 1 beim Übertragen von Daten von dem mobilen Datenträger zur Feststation,

Fig. 3 eine Darstellung des Signalverlaufs am Eingang einer feststationsseitigen Demodulationsschaltung in der Einrichtung gemäß Fig. 1 beim Übertragen von Daten vom Datenträger zur Feststation,

Fig. 4 eine Grafik des Signalverlaufs an ausgewählten Stellen im Schaltbild der Einrichtung gemäß Fig. 1 beim Übertragen von Daten von der Feststation zum Datenträger.

Beschreibung des Ausführungsbeispiels

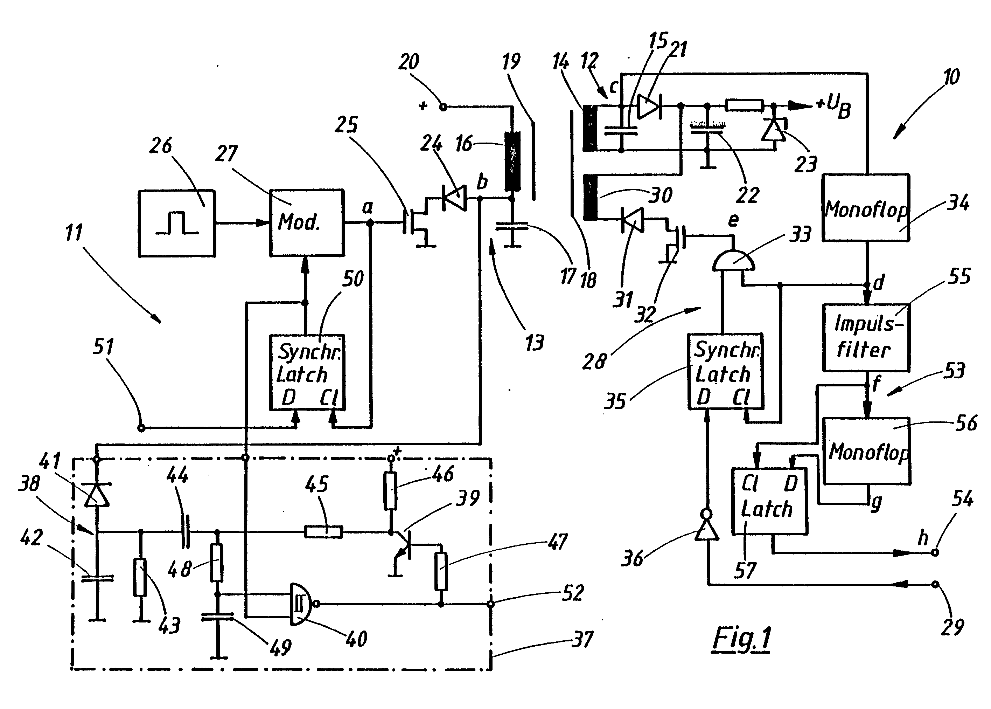

Die in Fig. 1 im Schaltbild dargestellte Einrichtung zum Übertragen von binären Daten zwischen einem mobilen Datenträger 10 und einer Feststation 11 dient zum Erfassen von Daten von Werkstückträgern, die auf einem Transport- oder Montageband eine Transferstraße durchlaufen, durch eine Verarbeitungs- oder Steuerstation und zum Einschreiben von neuen, eine Bearbeitungs- oder Transportinformation beinhaltenden Daten in die Werkstückträger. Eine Transferstraße mit solchen Einrichtungen ist z. B. in der EP-A-141070 ausführlich beschrieben. Auf dem Datenträger 10 und auf der Feststation 11 sind jeweils ein Schwingkreis 12 bzw. 13 angeordnet, wobei der Schwingkreis 12 als Parallelschwingkreis aus einer Spule 14 und einem Kondensator 15 und der Schwingkreis 13 als Reihenschwingkreis aus einer Spule 16 und einem Kondensator 17 ausgebildet ist. Die Spulen 14 und 16 sitzen jeweils auf einem Ferritkern 18 bzw. 19. Zur Datenübertragung werden die beiden Ferritkerne 18, 19 mit Abstand aneinander vorbeigeführt, wodurch die Spulen 14 und 16 kurzzeitig miteinander induktiv gekoppelt sind. Zur Stromversorgung der Feststation 11 ist eine Gleichstromquelle 20 vorgesehen, an welcher der Reihenschwingkreis 13 angeschlossen ist, während die Stromversorgung des Datenträgers 10 aus der von der Feststation induktiv übertragenen Energie abgeleitet ist. Hierzu ist dem Kondensator 15 des Parallelschwingkreises 14 über eine Diode 21 ein Kondensator 22 parallel geschaltet, dessen Ladespannung nach Spannungsbegrenzung mittels einer Zenerdiode 23 als Versorgungsspannung $U_B$ zur Verfügung steht.

Dem Kondensator 16 des Reihenschwingkreises 13 ist über eine Diode 24 ein elektronischer Schalter in Form eines Feldeffekttransistors (FET) 25 parallel geschaltet. Die Anode der Diode 24 ist dabei mit dem Kondensator 16 und die Kathode mit dem FET 25 verbunden. Der FET 25 wird mittels einer Schaltimpulsfolge geschaltet, die von einem Impulsgenerator 26 in Form von Rechteckimpulsen zur Verfügung gestellt wird. Zwischen dem Impulsgenerator 26 und dem Steuereingang des FET 25 ist ein Modulator 27 angeordnet, welcher die 4 MHz-Impulsfolge des Impulsgenerators 26 auf 1 MHz bzw. 0,5 MHz reduziert. Der Tastgrad, d. h. das Verhältnis der Impulsbreite zur Periodendauer, bleibt dabei konstant. Ein solcher Modulator 27 kann z. B. aus der Reihenschaltung zweier Frequenzteiler bestehen, wobei der eine Frequenzteiler durch 4 und der andere Frequenzteiler durch 2 teilt. Mittels eines Schalters kann der durch 2 teilende Frequenzteiler überbrückt und damit wirkungslos geschaltet werden.

Zur Übertragung der in einem nicht dargestellten Speicher im mobilen Datenträger 10 abgespeicherten binären Daten zur Feststation 11 ist an dem Schwingkreis 12 des mobilen Datenträgers 10 eine Modulationsschaltung 28 angeschlossen, der über ihren Eingang 29 die vom Speicher des Datenträgers 10 ausgelesenen binären Daten zugeführt werden. Die Modulationsschaltung 28 wirkt als Amplitudenmodulator und beeinflußt die Schwingungsvorgänge in den beiden Schwingkreisen 12, 13. Hierzu weist die Modulationsschaltung 28 eine weitere, ebenfalls auf dem Ferritkern 18 sitzende Spule 30 auf, die in Reihe mit einer Diode 31 und einem weiteren Feldeffekttransistor (FET) 32 dem Kondensator 15 des Schwingkreises 12 unter Zwischenschaltung der Diode 21 parallel geschaltet ist. Die Diode 31 ist dabei so gepolt, daß ihre Kathode unmittelbar oder über die Spule 30 an der Kathode der Diode 21 liegt. Der FET 32 wird von einem AND-Gatter 33 gesteuert, dessen einer Eingang mit dem Ausgang eines Monoflops 34 verbunden ist, das eingangsseitig an dem Schwingkreis 12 angeschlossen ist. Am anderen Eingang des AND-Gatters 33 liegt der Ausgang eines Synchronisations-Latch 35, hier als D-Flip-Flop ausgebildet, dessen D-Eingang über einen Inverter 36 mit dem Eingang 29 und dessen Takt-Eingang mit dem Ausgang des Monoflops 34 verbunden ist. Je nachdem, ob am Eingang 29 der Modulationsschaltung 28 der Binärwert « 0 » oder « 1 » anliegt, wird der FET 32 durchgeschaltet oder gesperrt und der Schwingungsvorgang in dem Schwingkreis 13, 14 beeinflußt oder nicht.

Zur Demodulation der übertragenen Binärwerte in der Feststation 11 ist hier eine Demodulationsschaltung 37 zur Amplitudendemodulation des Schwingungsvorgangs im Schwingkreis 13 vorgesehen. Die Demodulationsschaltung 37 ist dem Kondensator 17 des Schwingkreises 13 parallel geschalter und weist einen Spitzengleichrichter 38, einen an die Gleichstromquelle 30 angeschlossenen Transistor 39 und ein NAND-Gatter 40 mit einem Schmitt-Trigger-Eingang auf. Der aus Diode 41, Kondensator 42 und Widerstand 43 bestehende Spitzengleichrichter tastet durch entsprechende Polung der Diode 41 die negative Halbwelle des Spannungsverlaufs am Kondensator 17 des Schwingkreises 13 ab und ist über einen Hochpaß aus Kondensator 44 und Widerstand 45 zur Abtrennung des Gleichanteils mit dem Kollektor des Transistors 39 verbunden, der außerdem über einen Widerstand 46 an der Gleichstromquelle 20 angeschlossen ist. Die Basis des npn-Transistors 39 ist über einen Widerstand 47 mit dem Ausgang des NAND-Gatters 40 verbunden. Der eine Eingang des NAND-Gatters 40 ist über einen aus einem Widerstand 48 und einem Kondensator 49 bestehenden Tiefpaß zur Unterdrückung der Restwelligkeit des Spitzengleichrichters 38 an dem Kondensator 44 des Hochpasses angeschlossen, während an dem anderen Eingang des NAND-Gatters 40 ein Synchronisationsbit liegt. Dieses Synchronisationsbit ist am Ausgang eines Synchronisations-Latch 50 in Form eines D-Flip-Flops abgenommen. Das Synchronisations-Latch 50, das mit dem Modulator 27 verbunden ist, bewirkt je nach Binärwert des an seinem D-Eingang anliegenden Datums eine Herabsetzung der Impulsfrequenz des Impulsgenerators 26 auf entweder 1 MHz (Binärwert 1) oder auf 0,5 MHz (Binärwert 0). Hierzu ist der D-Eingang des Synchronisations-Latch 50 mit einem Dateneingang 51 und der Takteingang mit dem Ausgang des Modulators 27 verbunden.

Die Funktionsweise der Einrichtung beim Übertragen von Daten vom mobilen Datenträger 10 zur Feststation 11 ist wie folgt :

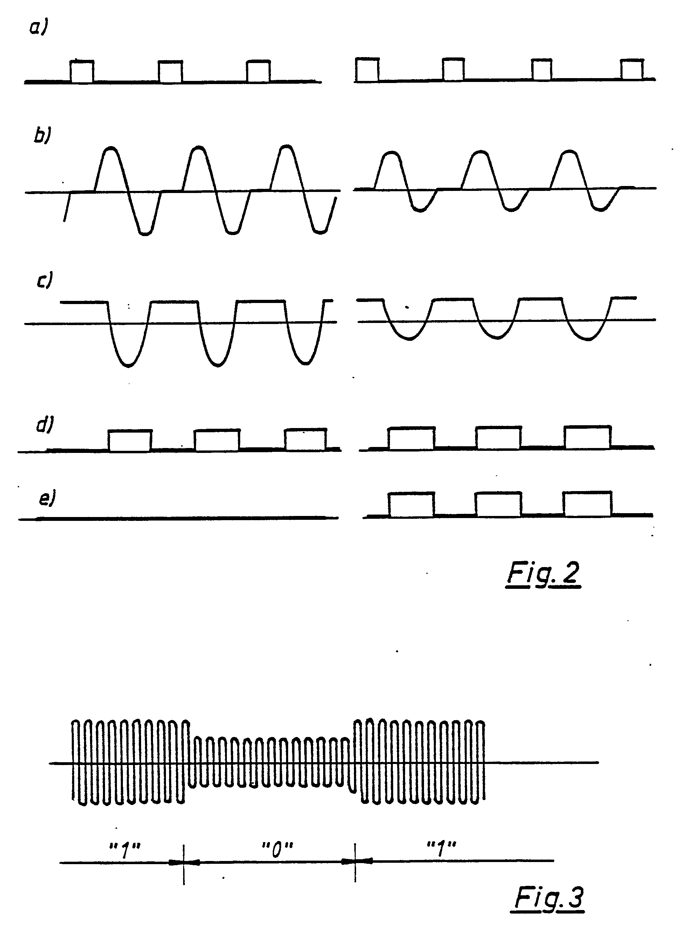

Der FET 25 wird mit einer Schaltimpulsfolge von 1 MHz gesteuert, wie sie in Fig. 2a dargestellt ist. Der Reihenschwingkreis 13 ist nunmehr derart ausgelegt, daß seine Resonanzfrequenz etwa gleich der Frequenz der Schaltimpulsfolge ist. Die Resonanzfrequenz $f_0$ errechnet sich in bekannter Weise zu

$$f_0 = 1/2\pi\sqrt{L \cdot C}$$

wobei L die Induktivität der Spule 16 und C die Kapazität des Kondensators 17 ist. Durch diese Auslegung des Schwingkreises 13 liegt der Nulldurchgang der Schwingung im Schwingkreis gerade im Einschaltpunkt des FET 25. Der dabei entstehende Spannungsverlauf am Kondensator 17 ist in Fig. 2b dargestellt. Die im induktiv gekoppelten Schwingkreis 12 des Datenträgers ausgelöste Schwingung verursacht einen Spannungsverlauf am Kondensator 15, wie er in Fig. 2c dargestellt ist. Mit der negativen Flanke des Spannungsverlaufs wird das Monoflop 34 gesetzt, das nach seiner einstellbaren Rückstellzeit wieder zurückfällt. Der dadurch am Ausgang des Monoflops 34 sich ergebende Signalverlauf ist in Fig. 2d dargestellt. Wird nunmehr von dem Datenspeicher des mobilen Datenträgers 10 der Binärwert « 1 » ausgelesen und an den Eingang 29 der Modulationsschaltung 28 gegeben, so liegt am Ausgang des NAND-Gatters 33 stets logisch « 0 » an (Fig. 2e). Damit bleibt der FET 32 stets gesperrt und in den Schwingungsvorgang des Schwingkreises 12 wird nicht eingegriffen. Der Signalverlauf an den Schaltpunkten a-e ist in Fig. 2 im linken Teil unter den Teilfiguren a-e dargestellt. Wird jedoch an den Dateneingang 21 der Binärwert « 0 » gelegt, so entsteht am Ausgang des NAND-Gatters 33 ein Signalverlauf, wie er in Fig. 2e rechts im Bild dargestellt ist. Der FET 32 wird entsprechend geöffnet und gesperrt, wodurch in den Schwingungsvorgang in den Resonanzkreisen 12 und 13 derart eingegriffen wird, daß insbesondere die negative Halbwelle der Schwingung in ihrer Amplitude reduziert wird. Der entsprechende Signalverlauf am Kondensator 15 und am Kondensator 17 ist in Fig. 2 rechts unter den Teilfiguren b und c dargestellt. Am Punkt b der Schaltung und damit am Eingang der Demodulationsschaltung 37 tritt ein Signalverlauf auf, wie er in Fig. 3 schematisch dargestellt ist. Deutlich ist die Amplitudenmodulation bei Übertragung des Binärwertes « 0 » zu erkennen. Deutlich ist auch zu erkennen, daß beim Übergang von einem Binärwert zum anderen eine Verschleifung im Signalverlauf auftritt, der insbesondere die Breite des Datums nicht eindeutig erkennen läßt. Mit der Demodulationsschaltung 37 werden aus diesem Signalverlauf wieder die ursprünglichen Binärwerte regeneriert, und zwar in ihrer ursprünglichen Länge oder Dauer. Diese Binärwerte sind am Ausgang 52 der Demodulationsschaltung 37 abnehmbar.

Die Amplitudendemodulation zur Rückgewinnung der Binärwerte wird in der Demodulationsschaltung 37 wie folgt durchgeführt :

Bei der Datenübertragung vom Datenträger 10 auf die Feststation 11 liegt das Synchronisationsbit am Ausgang des Synchronisations-Latch 50 immer auf logisch 1. Bei unmodulierter Schwingung, die der Übertragung des Binärwertes « 1 » entspricht, liegt das NAND-Gatter 40 am Ausgang auf logisch 1 und damit ist der Transistor 39 leitfähig geschaltet. Damit liegt der andere Eingang des NAND-Gatters 40 über die Widerstände 48 und 45 quasi an Masse und damit auf logisch « 0 ». Bei Übertragung des Binärwertes « 0 » wird moduliert und der Spitzengleichrichter 38 erfaßt eine positive Flanke im Signalverlauf (Fig. 3), die über den Kondensator 44 und den Widerstand 48 auf den Eingang des NAND-Gatters 40 gelangt. Das NAND-Gatter 40 geht am Ausgang von logisch 1 auf logisch 0, der Transistor 39 wird gesperrt und der Eingang des NAND-Gatters 40 wird sauber auf logisch 1 gezogen. Wird nunmehr wiederum der Binärwert « 1 » übertragen, so tritt aufgrund des Ansteigens der Signalamplitude am Ausgang des Spitzengleichrichters 38 eine negative Flanke auf, die über den Kondensator 44 und den Widerstand 48 den Eingang des NAND-Gatters 40 wiederum kurzzeitig auf logisch 0 legt. Damit geht der Ausgang des NAND-Gatters 40 wiederum auf logisch 1, der Transistor 39 wird leitend und hält den Eingang des NAND-Gatters 40 auf logisch 0. Am Ausgang 52 der Demodulationsschaltung 37 sind die Binärwerte in ihrer exakten ursprünglichen Länge oder Zeitdauer abnehmbar.

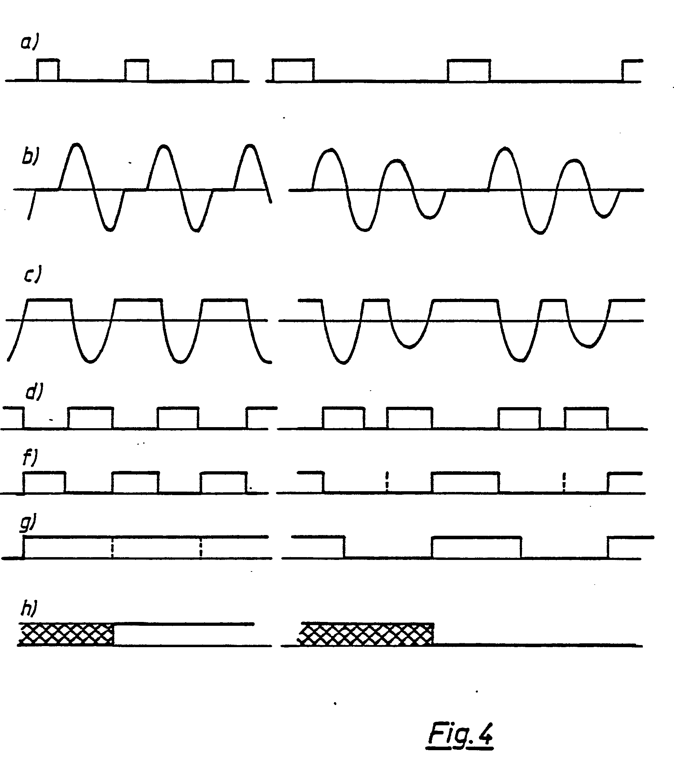

Die Datenübertragung von der Feststation 11 zu dem mobilen Datenträger 10 erfolgt durch Frequenzmodulation. Soll der Binärwert « 1 » übertragen werden, so liegt am Eingang des FET 25 eine Schaltimpulsfolge der Frequenz 1 MHz, wie sie in Fig. 4a links dargestellt ist. Soll der Binärwert « 0 » übertragen werden, so liegt am Eingang des FET 25 eine Schaltimpulsfolge von 0,5 MHz, wie sie in Fig. 4a rechts dargestellt ist. Das Frequenzverhältnis beträgt damit 2 : 1 und das Verhältnis der Impulslängen 1 : 2. Damit ist der Tastgrad beider Schaltimpulsfolgen gleich groß. Der Signalverlauf am Kondensator 17 des Schwingkreises 13 und am Kondensator 15 des Schwingkreises 12 bei beiden Schaltimpulsfolgen ist in Fig. 4b und c dargestellt.

Zur Rückgewinnung der übertragenen Daten ist datenträgerseitig eine Demodulationsschaltung 53 vorgesehen, an deren Ausgang 54 die rückgewonnenen binären Daten abgenommen werden können. Die Demodulationsschaltung 53 weist ein an dem Schwingkreis 12 angeschlossenes Monoflop, das zugleich von dem Monoflop 34 gebildet wird, ein Impulsfilter 55, ein retriggerbares Monoflop 56 und ein D-Flip-Flop 57 auf, dessen Ausgang mit dem Ausgang 54 der Demodulationsschaltung 53 verbunden ist. Dabei ist das Impulsfilter 55 dem Monoflop 34 und das Monoflop 56 dem Impulsfilter 55 jeweils nachgeschaltet. Der D-Eingang des D-Flip-Flops 57 ist mit dem Ausgang des Monoflops 56 und der Takteingang des D-Flip-Flops 57 ist mit dem Ausgang des Impulsfilters 55 verbunden. Mit der negativen Flanke im Spannungsverlauf am Kondensator 15 des Schwingkreises 12 (Fig. 4c) wird das Monoflop 34 getriggert, dessen Rücksetzzeit kleiner ist als eine Schwingungsperiode im Signalverlauf. Am Ausgang des Monoflops 34 liegt eine Impulsfolge, wie sie in Fig. 4d dargestellt ist. Das Impulsfilter 55 dient zur Unterdrückung des jeweils zweiten Impulses am Ausgang des Monoflops 34 (Fig. 4d rechts) im Falle der Übertragung des Binärwertes « 0 ». Dieses Impulsfilter 55 kann z. B. als retriggerbares Monoflop ausgebildet sein, dessen Rücksetzzeit mindestens dem zeitlichen Abstand der positiven Flanke des ersten und des zweiten Impulses entspricht. Das als retriggerbares Monoflop ausgebildete Impulsfilter 55 wird jeweils mit der positiven Flanke der am Eingang anstehenden Impulse gesetzt. Am Q̄-Ausgang des Impulsfilters 55 liegt dann jeweils eine Impulsfolge an, wie sie in Fig. 4f dargestellt ist. Diese Impulse liegen einerseits als Clock-Impulse an dem D-Flip-Flop 57 und triggern mit ihrer positiven Flanke andererseits das Monoflop 56. Die Rücksetzzeit des ebenfalls retriggerbaren Monoflops 56 ist so ausgebildet, daß sie mindestens so groß ist wie der Kehrwert der Frequenz der Impulsfolge am Ausgang des Impulsfilters 55 im Falle der Übertragung des Binärwertes « 1 » (Fig. 4f links). Am Ausgang des Monoflops 56 tritt dann ein Signalverlauf auf, wie er in Fig. 4g abgebildet ist. Da der Ausgang des D-Flip-Flops 57 mit jeder positiven Impulsflanke den Zustand des D-Eingangs übernimmt, wird am Ausgang 54 der Demodulationsschaltung 53 der Binärwert « 1 » (Fig. 4h links) und der Binärwert « 0 » (Fig. 4h rechts) abgenommen, entsprechend dem am Eingang 51 in der Feststation 11 eingegebenen Binärwert « 1 » bzw. « 0 ». Das Synchronisations-Latch 50 bewirkt, daß eine Veränderung des Datensignals von « 1 » auf « 0 » und umgekehrt immer erst zu Beginn der nächsten Taktperiode wirksam wird. Die gleiche Funktion kommt dem Synchronisations-Latch 35 bei der Datenübertragung vom Datenträger 10 zur Feststation 11 zu.

Die Erfindung ist nicht auf das vorstehend beschriebene Ausführungsbeispiel einer Einrichtung zur Datenübertragung beschränkt. So kann die Demodulationsschaltung 37 in der Feststation 11 auch anders ausgebildet werden. In jedem Fall muß aber die Demodulationsschaltung eine Amplitudendemodulation des am Kondensator 17 des Schwingkreises 13 abgenommenen Signalverlaufs vornehmen. Die beschriebene Demodulationsschaltung 37 ist besonders vorteilhaft, da sie den logischen Pegel des übertragenen Signals einwandfrei wiederherstellt, ohne daß dies durch langsame Schwankungen der Schwingung im Signal beeinflußt wird. Die im amplitudenmodulierten Signal erkennbare Verschleifung wird regeneriert, so daß die Dauer des logischen Pegels nicht unzulässig verändert wird.

## Patentansprüche

1. Einrichtung zum Übertragen von binären Daten zwischen einem mobilen Datenträger (10) und einer Feststation (11), insbesondere zwischen einem Werkstückträger und einer Bearbeitungs- oder Steuerstation an Transferstraßen oder Montagebändern, mit einem der Feststation zugeordneten ersten Schwingkreis (13), bestehend aus der Reihenschaltung einer Spule (16) mit einem Kondensator (17), zu dessen Kondensator (17) ein mittels einer Schaltimpulsfolge (a) schaltbarer elektronischer Schalter (25), insbesondere ein Transistor, parallel geschaltet ist, mit einem dem Datenträger zugeordneten zweiten Schwingkreis (12), dessen Spule bei Vorbeibewegen des Datenträgers an der Feststation mindestens kurzzeitig mit der Spule des ersten Schwingkreises induktiv gekoppelt ist, mit einer mit dem zweiten Schwingkreis verbundenen Modulationsschaltung (28) zur Beeinflußung der Schwingungsvorgänge in den gekoppelten Schwingkreisen in Abhängigkeit von einem der beiden Binärwerte der vom Datenträger zur Feststation zu übertragenden Daten und mit einer mit dem ersten Schwingkreis verbundenen Demodulationsschaltung (37) zur Rückgewinnung des jeweils übertragenen Binärwertes, wobei der erste Schwingkreis (13) derart ausgelegt ist, daß seine Resonanzfrequenz etwa gleich der Frequenz der Schaltimpulsfolge (a) ist, daß die Beeinflussung der Schwingungsvorgänge durch die Modulationsschaltung (28) derart erfolgt, daß die Amplitude der sich in den gekoppelten Schwingkreisen bei angelegter Schaltimpulsfolge einstellenden Schwingungsvorgänge moduliert wird, und daß die Rückgewinnung des jeweils übertragenen Binärwertes durch Amplitudendemodulation der Spannung am Verbindungspunkt von Kondensator (17) und Spule (16) des ersten Schwingkreises (13) durchgeführt wird.

2. Einrichtung nach Anspruch 1, dadurch gekennzeichnet, daß die Modulationsschaltung (28) derart ausgebildet ist, daß die Amplitudendemodulation im wesentlichen nur in der negativen Halbwelle der Schwingungsvorgänge durchgeführt wird.

3. Einrichtung nach Anspruch 2, dadurch gekennzeichnet, daß die Modulationsschaltung (28) eine weitere Spule (30), die mit der Spule (14) des zweiten Schwingkreises (12) auf einem Ferritkern (18) angeordnet ist, einen elektronischen Schalter, vorzugsweise einen Feldeffekttransistor (32), ein AND-Gatter (33) und ein Monoflop (34) aufweist, daß das Monoflop (34) eingangsseitig mit dem zweiten Schwingkreis (12) und ausgangsseitig mit dem Eingang des AND-Gatters (33) verbunden ist, an dessen anderem Eingang die vom Datenträger zu übertragenden Daten anliegen und an dessen Ausgang der Steuereingang des elektronischen Schalters (32) angeschlossen ist, und daß der elektronische Schalter (32) in Reihe mit der weiteren Spule (30) dem zweiten Schwingkreis (12) über eine Diode (21) parallel geschaltet ist.

4. Einrichtung nach Anspruch 3, dadurch gekennzeichnet, daß dem Dateneingang des AND-Gatters (33) ein als D-Flip-Flop ausgebildetes Synchronisations-Latch (35) vorgeschaltet ist, an dessen D-Eingang die zu übertragenden Daten invertiert anliegen und dessen Takteingang mit dem Ausgang des Monoflops (34) verbunden ist.

5. Einrichtung nach einem der Ansprüche 1-4, dadurch gekennzeichnet, daß die Demodulationsschaltung (37) einen in der negativen Halbwelle des Schwingungsvorgangs wirksamen Spitzengleichrichter (38), einen an einer Versorgungsgleichspannung (20) angeschlossenen elektronischen Schalter (39) und ein NAND-Gatter (40), vorzugsweise mit einem Schmitt-Trigger-Eingang, aufweist, daß der Ausgang des Spitzengleichrichters (38) über einen Hochpaß (44, 45) mit dem mit der Versorgungsgleichspannung (20) verbundenen Anschluß des elektronischen Schalters (39) verbunden ist, daß dem elektronischen Schalter (39) ein Tiefpaß (48, 49) parallel geschaltet ist und daß das NAND-Gatter (40) eingangsseitig einerseits mit dem Tiefpaß (48, 49) verbunden und andererseits mit einem Synchronisationsbit belegt ist und ausgangsseitig an den Steuereingang des elektronischen Schalters (39) angeschlossen ist.

6. Einrichtung nach Anspruch 5, dadurch gekennzeichnet, daß der elektronische Schalter als npn-Transistor (39) ausgebildet ist und daß das Synchronisationsbit den Binärwert logisch « 1 » aufweist.

7. Einrichtung nach einem der Ansprüche 1-6, dadurch gekennzeichnet, daß die Frequenz der Schaltimpulsfolge in Abhängigkeit von einem der beiden Binärwerte der von der Feststation (11) zum Datenträger (10) zu übertragenden Daten halbiert wird.

8. Einrichtung nach Anspruch 7, dadurch gekennzeichnet, daß der Tastgrad der beiden jeweils einem Binärwert zugeordneten Schaltimpulsfolgen gleich ist.

9. Einrichtung nach Anspruch 7 oder 8, dadurch gekennzeichnet, daß zur Erzeugung der Schaltimpulsfolgen ein Rechteckgenerator (26) vorgesehen ist, dessen Ausgang über einen Frequenzmodulator (27) mit dem Steuereingang des elektronischen Schalters (25) im ersten Schwingkreis (13) verbunden ist, und daß der Frequenzmodulator (27) derart aufgebaut ist, daß bei Anlegen eines der beiden Binärwerte der zum Datenträger (10) zu übertragenden Daten an den Frequenzmodulator (27) die Frequenz der Schaltimpulsfolge halbiert und die Impulsdauer der Schaltimpulse verdoppelt wird.

10. Einrichtung nach Anspruch 9, dadurch gekennzeichnet, daß das die Binärwerte an den Frequenzmodulator (27) über ein als D-Flip-Flop ausgebildetes Synchronisations-Latch (50) gelegt sind, an dessen D-Eingang die Binärwerte unmittelbar anstehen und dessen Takteingang mit dem Ausgang des Frequenzmodulators (27) verbunden ist.

11. Einrichtung nach Anspruch 5 oder 6 und Anspruch 10, dadurch gekennzeichnet, daß zur Gewinnung des Synchronisationsbits der eine Eingang des NAND-Gatters (40) mit dem Ausgang des Synchronisations-Latch (50) verbunden ist.

12. Einrichtung nach einem der Ansprüche 7-11, dadurch gekennzeichnet, daß an dem zweiten Schwingkreis (12) eine weitere Demodulationsschaltung (53) zur Rückgewinnung der von der Feststation (11) zum Datenträger (10) übertragenen Daten angeschlossen ist, daß die Demodulationsschaltung (53) aufweist : ein erstes Monoflop (34), dessen Eingang mit dem Ausgang des zweiten Schwingkreises (12) verbunden ist, ein Impulsfilter (55), dessen Eingang mit dem Ausgang des ersten Monoflops (34) verbunden ist, ein zweites Monoflop (56), dessen Eingang mit dem Ausgang des Impulsfilters (55) verbunden ist, und ein D-Flip-Flop (57), dessen D-Eingang mit dem Ausgang des zweiten Monoflops (56) und dessen Takteingang mit dem Ausgang des Impulsfilters (55) verbunden ist, und daß am Ausgang des D-Flip-Flops (57) die übertragenen Daten abnehmbar sind.

13. Einrichtung nach Anspruch 3 oder 4 und Anspruch 12, dadurch gekennzeichnet, daß das erste Monoflop (34) von dem Monoflop der Modulationsschaltung (28) gebildet ist.

## Claims

1. Unit for transferring binary data between a moveable data medium (10) and a fixed station (11), in particular between a workpiece carrier and a processing or control station at transfer lines or assembly belts, comprising a first resonant circuit (13) consisting of the series circuit of a coil (16) with a capacitor (17), which is associated with the fixed station and a capacitor (17) of which is connected in parallel with an electronic switch (25), particularly a transistor, which can be switched by means of a switching pulse sequence (a), with a second resonant circuit (12) which is associated with the data medium and the coil of which is inductively coupled, at least for a short time, to the coil of the first resonant circuit when the data medium is moved past the fixed station, with a modulation circuit (28), which is connected to the second resonant circuit, for influencing the oscillation processes in the coupled resonant circuits in dependence on one of the two binary values of the data to be transferred from the data medium to the fixed station and with a demodulation circuit (37), which is connected to the first resonant circuit, for recovering the binary value transferred in each case, characterized in that the first resonant circuit (13) is designed in such a manner that its resonant frequency is approximately equal to the frequency of the switching pulse sequence (a), in that the oscillation processes are influenced by the modulation circuit (28) in such a manner that the amplitude of the oscillation processes occurring in the coupled resonant circuits when the switching pulse sequence is applied is modulated and that the binary value transferred in each case is recovered by amplitude demodulation of the voltage at the junction of capacitor (17) and coil (16) of the first resonant circuit (13).

2. Unit according to Claim 1, characterised in that the modulation circuit (28) is constructed in such a manner that the amplitude modulation is essentially only performed in the negative halfwave of the oscillation processes.

3. Unit according to Claim 2, characterised in that the modulation circuit (28) exhibits a further coil (30), which is arranged on a ferrite core (18) with the coil (14) of the second resonant circuit (12), an electronic switch, preferably a field-effect transistor (32), an AND gate (33) and a monostable flip-flop (34), in that the monostable flip-flop (34) is connected to the second resonant circuit (12) at the input and to the input of the AND gate (33) at the output, at the other input of which the data to be transferred from the data medium are present and the output of which is connected to the control input of the electronic switch (32), and in that the electronic switch (32) is connected, in series with the further coil (30), in parallel with the second resonant circuit (12) via a diode (21).

4. Unit according to Claim 3, characterized in that the data input of the AND gate (33) is preceded by a synchronisation latch (35), which is constructed as a D-type flip-flop and at the D-type input of which the data to be transferred are present in an inverted form and the clock input of which is connected to the output of the monostable flip-flop (34).

5. Unit according to one of Claims 1-4, characterized in that the demodulation circuit (37) exhibits a peak detector (38) which is effective in the negative halfwave of the oscillation process, an electronic switch (39) which is connected to a supply direct voltage (20), and an NAND gate (40), preferably having a Schmitt trigger input, in that the output of the peak detector (38) is connected via a high-path filter (44, 45) to the connection, connected to the supply direct voltage (20), of the electronic switch (39), in that the electronic switch (39) is connected in parallel with a lower-path filter (48, 49), and in that the NAND gate (40), on the one hand, is connected at its input to the lower-path filter (48, 49) and, on the other hand, a synchronisation bit is applied to its input and that its output is connected to the control input of the electronic switch (39).

6. Unit according to claim 5, characterised in that the electronic switch is constructed as npn transistor (39) and in that the synchronisation bit exhibits the binary value of logical « 1 ».

7. Unit according to one of Claims 1-6, characterized in that the frequency of the switching pulse sequence is halved in dependence on one of the two binary values of the data to be transferred from the fixed station (11) to the data medium (10).

8. Unit according to Claim 7, characterised in that the duty ratio of the two switching pulse sequences in each case allocated to one binary value is identical.

9. Unit according to Claim 7 or 8, characterized in that, for generating the switching pulse sequences, a rectangular-wave generator (26) is provided the output of which is connected via a frequency modulator (27) to the control input of the electronic switch (25) in the first resonant circuit (13) and in that the frequency modulator (27) is constructed in such a manner that, when one of the two binary values of the data to be transferred to the data medium (10) is applied to the frequency modulator (27), the frequency of the switching pulse sequence is halved and the pulse duration of the switching pulses is doubled.

10. Unit according to Claim 9, characterized in that the binary values are applied to the frequency modulator (27) via a synchronisation latch (50) constructed as D-type flip-flop at the D-type input of which the binary values are directly present and the clock input of which is connected to the output of the frequency modulator (27).

11. Unit according to Claim 5 or 6 and Claim 10, characterized in that, for obtaining the synchronisation bit, one input of the NAND gate (40) is connected to the output of the synchronisation latch (50).

12. Unit according to one of Claims 7-11, characterized in that the second resonant circuit (12) is connected to a further demodulation circuit (53) for recovering the data transferred from the fixed station (11) to the data medium (10), in that the demodulation circuit (53) exhibits a first monostable flip-flop (34), the input of which is connected to the output of the second resonant circuit (12), a pulse filter (55) the input of which is connected to the output of the first monostable flip-flop (34), a second monostable flip-flop (56) the input of which is connected to the output of the pulse filter (55), and a D-type flip-flop (57), the D-type input of which is connected to the output of the second monostable flip-flop (56) and the clock input of which is connected to the output of the pulse filter (55), and in that the transferred data can be picked up at the output of the D-type flip-flop (57).

13. Unit according to Claim 3 or 4 and Claim 12, characterized in that the first monostable flip-flop (34) is formed by the monostable flip-flop of the modulation circuit (28).

**Revendications**

1. Dispositif pour le transfert de données binaires entre un support d'information mobile (10) et une station fixe (11), en particulier entre un porte-pièces et une station d'usinage ou de commande sur des chaînes-transfert ou chaînes de montage, avec un premier circuit oscillant (13) se composant du montage en série d'une bobine (16) et d'un condensateur (17) et affecté à la station fixe, condensateur (17) sur lequel est branché en parallèle un interrupteur électronique (25), en particulier un transistor, commutable au moyen d'une succession d'impulsions (a), avec un deuxième circuit oscillant (12) affecté au support de données, dont la bobine est au moins brièvement accouplée inductivement à la bobine du premier circuit oscillant lors du passage du support de données sur la station fixe, avec un circuit de modulation (28) relié au deuxième circuit oscillant, pour influencer les processus d'oscillation dans les circuits oscillants accouplés en fonction de l'une des deux valeurs binaires des données à transmettre du support de données à la station fixe et avec un circuit de démodulation (37) relié au premier circuit oscillant pour récupérer chacune des valeurs binaires transmises, dans lequel le premier circuit oscillant (13) est réalisé de façon que sa fréquence de résonance soit approximativement égale à la fréquence de la succession d'impulsions (a), l'influence des processus d'oscillation par le circuit de modulation (28) s'effectuant de telle sorte que l'amplitude des processus d'oscillation s'établissant dans les circuits oscillants, lorsqu'est appliquée la succession d'impulsions de commande, est modulée par les processus d'amortissement, et la récupération de chaque valeur binaire transmise étant exécutée par démodulation d'amplitude de la tension au point de liaison du condensateur (17) et de la bobine (16) du premier circuit oscillant (13).

2. Dispositif selon la revendication 1, caractérisé en ce que le circuit de démodulation (28) est réalisé de telle sorte que la démodulation d'amplitude soit principalement réalisée uniquement par la demi-onde négative des processus d'oscillation.

3. Dispositif selon la revendication 2, caractérisé en ce que le circuit de modulation (28) présente une bobine (30) supplémentaire qui est disposée avec la bobine (14) du premier circuit oscillant (12) sur un noyau en ferrite (18), un interrupteur électronique, de préférence un transistor à effet de champ (32), une porte ET (33) et une bascule monostable (34), la bascule monostable (34) étant reliée côté entrée au deuxième circuit oscillant (12) et côté sortie à l'entrée de la porte ET (33), à l'autre entrée de laquelle sont situées les données à transmettre par le support de données et à la sortie de laquelle est raccordée l'entrée de commande de l'interrupteur électronique (32), et l'interrupteur électronique (32) en série avec la bobine supplémentaire (30) étant monté en parallèle avec le deuxième circuit oscillant (12) par une diode (21).

4. Dispositif selon la revendication 3, caractérisé en ce qu'un verrou de synchronisation (35) réalisé sous forme de bascule D est monté en amont de l'entrée de données de la porte ET (33), circuit à l'entrée D duquel se situent les données inversées à transmettre et dont l'entrée de synchronisation est reliée à la sortie de la bascule monostable (34).

5. Dispositif selon l'une des revendications 1 à 4, caractérisé en ce que le circuit de démodulation (37) présente un redresseur à contact par pointe (38) actif dans la demi-onde négative du processus d'oscillation, un interrupteur électronique (39) raccordé à une tension continue d'alimentation (20) et une porte NAND (40), de préférence avec une entrée de déclencheur de Schmitt, la sortie du redresseur à contact par pointe (38) étant reliée par un filtre passe-haut (44, 45) au raccordement de l'interrupteur électronique (39) relié à la tension continue d'alimentation (20), en ce qu'un filtre passe-bas (48, 49) est branché en parallèle de l'interrupteur électronique (39), et la porte NAND (40) étant reliée côté entrée d'une part au filtre passe-bas (48, 49) et soumise d'autre part à un bit de synchronisation et raccordée côté sortie à l'entrée de commande de l'interrupteur électronique (39).

6. Dispositif selon la revendication 5, caractérisé en ce que l'interrupteur électronique est réalisé sous forme de transistor npn (39) et que le bit de synchronisation présente la valeur logique binaire « 1 ».

7. Dispositif selon l'une des revendications 1 à 6, caractérisé en ce que la fréquence de la succession d'impulsions est divisée par deux en fonction de l'une des deux valeurs binaires des données à transmettre depuis la station fixe (11) au support de données (10).

8. Dispositif selon la revendication 7, caractérisé en ce que le degré de balayage des deux successions d'impulsions chaque fois affectées à une valeur binaire, est identique.

9. Dispositif selon la revendication 7 ou 8, caractérisé en ce qu'un générateur d'ondes carrées (26) est prévu pour produire les successions d'impulsions de commande, générateur dont la sortie est reliée par un modulateur de fréquence (27) à l'entrée de commande de l'interrupteur électronique (25) dans le premier circuit oscillant (13), et que le modulateur de fréquence (27) est construit de façon que lorsque l'une des deux valeurs binaires des données à transmettre au support de données (10) est présente sur le modulateur de fréquence (27), la fréquence de la succession d'impulsions est divisée par deux et la durée d'impulsion des impulsions de commande est doublée.

10. Dispositif selon la revendication 9, caractérisé en ce que les valeurs binaires sont placées sur le modulateur de fréquence (27) par un verrou de synchronisation (50) réalisé sous forme de bascule bistable D, circuit à l'entrée D duquel sont directement appliquées les valeurs binaires et dont l'entrée de synchronisation est reliée à la sortie du modulateur de fréquence (27).

11. Dispositif selon la revendication 5 ou 6, caractérisé en ce que l'une des entrées de la porte NAND (40) est reliée à la sortie du verrou de synchronisation (50) pour obtenir le bit de synchronisation.

12. Dispositif selon l'une des revendications 7 à 11, caractérisé en ce qu'un circuit de démodulation (53) est raccordé au deuxième circuit oscillant (12) pour récupérer les données transmises par la station fixe (11) au support d'information (10), le circuit de démodulation comprenant : une première bascule monostable (34), dont l'entrée est reliée à la sortie du deuxième circuit oscillant (12), un filtre d'impulsion (55), dont l'entrée est reliée à la sortie de la première bascule monostable (34), une deuxième bascule monostable (56), dont l'entrée est reliée à la sortie du filtre d'impulsion (55) et une bascule bistable (57) dont l'entrée D est reliée à la sortie de la deuxième bascule monostable (56) et dont l'entrée de synchronisation est reliée à la sortie du filtre d'impulsion (55), et les données transmises étant prélevables à la sortie de la bascule bistable (57).

13. Dispositif selon la revendication 3 ou 4 et la revendication 12, caractérisé en ce que la première bascule monostable (34) est formée de la bascule monostable du circuit de modulation (28).

Fig.1

a)

b)

c)

d)

e)

_Fig. 2_

"1" | "0" | "1"

_Fig. 3_

a)

b)

c)

d)

f)

g)

h)

*Fig.4*